# EUROPEAN PATENT SPECIFICATION

(11) **EP 0 972 659 B1**
(45) Date of publication and mention of the grant of the patent: **07.06.2006**
(21) Application number: 99810615.7
(22) Date of filing: 12.07.1999
(51) Int. Cl.: B60D 1/52

(54) **Towing hook structure, suspension structure and holder for a towing hook structure**
Anhängerkupplungsvorrichtung, Aufhängungsstruktur und Halter für eine Anhängerkupplungsstruktur
Dispositif d'attelage, structure de suspension et support pour une structure d'attelage

(30) Priority: 13.07.1998 NL 1009634
(43) Date of publication of application: 19.01.2000
(73) Proprietor: SCAMBIA INDUSTRIAL DEVELOPMENTS AKTIENGESELLSCHAFT, 9494 Schaan (LI)
(72) Inventor: de Rooij, Werner H.J.A., 4844 TJ Terheijden (NL); Som, Michiel J. M., 4931 KP Geertruidenberg (NL)
(74) Representative: Eder, Carl E.

(56) References cited:
- DE-A- 4 243 552
- DE-C- 4 003 009
- DE-U- 9 200 287
- NL-A- 7 705 201

## Description

The invention relates to a towing hook structure, comprising a holder and a removable towing hook, which is provided with a towing hook ball and an attachment rod, in which holder the attachment rod of the towing hook is accommodated, which attachment rod and holder have interacting stop and locking means for attaching the attachment rod to the holder, and which holder has suspension means for suspending it from a support.

A towing hook structure of this nature is known for example from DE 4243552A. When the towing hook is not being used, it can be removed from the holder. In that case, the towing hook structure should preferably be completely removed from sight, through the rear parts of the vehicle body, in particular the bumper.

In practice, there are about two types of towing hook structures of this nature. In one structure, the attachment rod runs approximately horizontally, opening out beneath the bumper and facing towards the rear. In the other structure, the attachment rod is directed vertically, opening out downwards.

Apart each needing from different towing hooks, namely a towing hook with an attachment rod which runs horizontally with respect to the towing ball situated in its normal position of use, and one with an attachment rod which runs vertically upwards with respect to the towing ball situated in its normal position of use, these structures also require two different holders. Also, the support structure to which the holder is attached must be available in two different designs.

The object of the invention is to provide a towing hook structure in which the holder is suitable, without the need for any modifications, for both types of towing hooks.

This object is achieved by the towing hook structure defined by claim 1. Thus, this towing hook structure has suspension means that allow the holder to be attached to the support in two positions, in one of which positions the insertion opening is rotated through approximately or, for example, precisely 90°, with respect to the other position.

The support can be attached to a vehicle which is substantially symmetric to a plane of symmetry, wherein this plane is vertical, when the vehicle stands on a horizontal ground surface. The attachment rod can have a straight longitudinal axis which coincides with a straight longitudinal axis of a recerving hole of the holder. This longitudinal axis can essentially lie in said two positions in said longitudinal plane of symmetry when the towing hook structure is mounted on the said vehicle.

The first advantage of such a design of the towing hook structure is that only one type of holder has to be produced, resulting in cost benefits. When a vehicle is being prepared for a removable towing hook, it is also only necessary to use one and the same support in each case. Independent of the wishes of the subsequent purchaser, a support of this nature may already be attached, and consequently the production and preparation flexibility is increased.

With the towing hook structure according to the invention, it is possible to use a towing hook in which the suspension means are positioned symmetrically with respect to a line of symmetry which runs at 45° with respect to the longitudinal axis of the attachment rod.

By rotating the holder about the line of symmetry, the holder can be moved into two positions with regard to the suspension means, one position for the towing hook with a horizontal attachment rod and one position for the towing hook with a vertical attachment rod, yet the suspension means can be attached to the support at the same points.

The suspension means may have at least two attachment holes which are directed transversely with respect to the insertion opening and the axes of which define a plane which forms an angle of 45° with the longitudinal axis of the attachment rod.

The attachment rod is preferably accommodated in a receiving hole in the holder, which receiving hole is preferably continuous, i.e. a through hole, for production engineering reasons. At one end, the said receiving hole has support means for stop means, such as projections, provided on the attachment rod of the towing hook, while the other end can be closed off by means of a cap. When the hook structure is assembled, the attachment rod can be inserted at the receiving hole end having the support means into the receiving hole.

The attachment holes may open out at two side faces which face away from one another, while the receiving hole may open out on further faces which extend transversely between the said side faces.

In order to be attached to the holder, the cap may have two lugs which engage over the side faces which face away from one another.

The invention furthermore relates to a suspension structure for a removable towing hook, comprising a towing hook structure and a support, wherein the suspension structure is defined by claim 8. Thus, the suspension structure comprises a holder and a towing hook which is provided with a towing hook ball and an attachment rod, in which holder the attachment rod of the towing hook can be accommodated. The attachment rod and holder have interacting stop and locking means for them to be attached to one another. The holder has suspension means for suspending it from a support which can be attached to the rear side of a vehicle, wherein the support can have two flanges, between which the holder of the towing hook structure can be accommodated and wherein the distance between the flanges can be approximately equal to the distance between the side faces, which face away from one another, of the holder.

According to the invention, this suspension structure is designed in such a manner that the suspension means allows the holder to be attached to the flanges in two positions, in one of which positions the attachment rod is rotated through approximately or precisely 90° with respect to the other position, and in which two positions the longitudinal axis of the attachment rod, for example, essentially coincides with a longitudinal plane of symmetry of a vehicle, in the position in which the towing hook structure is mounted on the said vehicle.

The said flanges may each have at least two attachment holes which are positioned so as to correspond to the attachment holes in the holder, and an attachment bolt is fitted through each of the aligned attachment holes of the flanges and the holder.

The invention furthermore relates to a holder as specified in claim 11.

The invention will now be explained in more detail with reference to an exemplary embodiment of the suspension structure which is illustrated in the figures, in which:
Figure 1 shows a perspective view of the suspension structure;
Figure 2 shows a side view of the position of the holder with respect to the support in the state illustrated in Figure 1;
Figure 3 shows the alternative possible position of the holder with respect to the support;
Figure 4 shows a perspective view of a holder according to the invention.

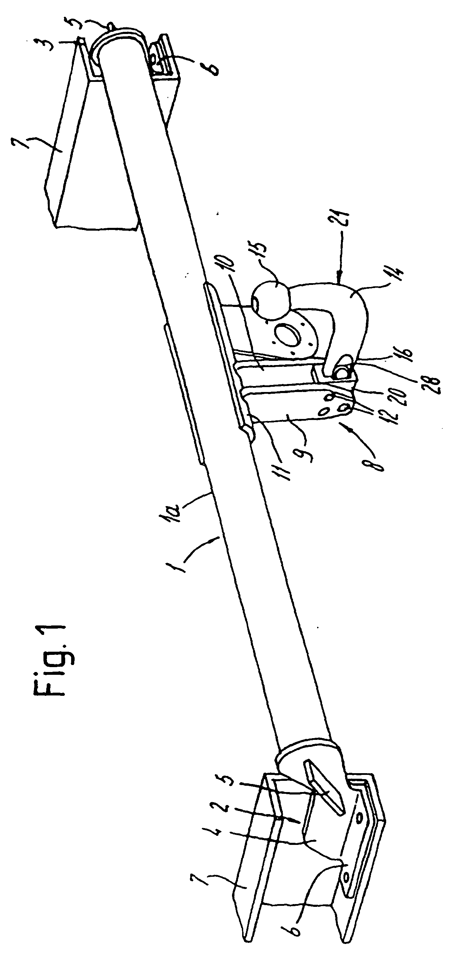

The suspension structure which is illustrated in Figure 1 comprises a support 1. The support 1 has a support bar la which at both ends is provided with attachment supports 2, 3. Each of these attachment supports has a plate flange 4 which is welded firmly to the appropriate end of the support bar la, projects away from the bar la transversely thereto and has a reinforcement rib 5. Furthermore, each attachment support 2, 3 comprises an attachment flange 6, by means of which the structure is attached to a chassis bar 7 of the chassis of a towing vehicle, such as a motorcar, which is not shown in more detail.

In the exemplary embodiment depicted, the attachment supports 2, 3 comprise a piece of plate material which has been bent substantially into an L shape.

The towing hook support, which is denoted overall by 8, is attached to the centre of the support bar 1a, between the attachment supports 2, 3. This towing hook support 8 comprises two flanges 9, 10 which, at their top end, are welded fixedly to the reinforcement shell 11. In turn, this reinforcement shell 11 is welded fixedly to the support bar la by means of a weld which runs around its periphery.

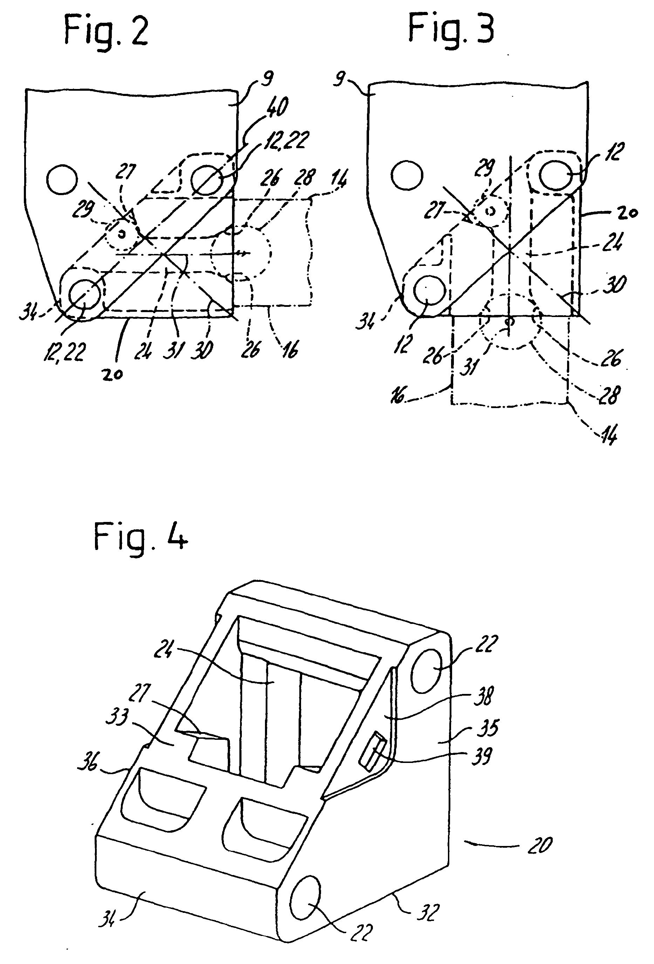

The holder 20 can also be seen in Figures 2, 3 and 4, wherein Figures 2, 3 show also a lower portion of the flange 9 and, schematically with dash-dot lines, a portion of the towing hook 14. At their bottom end, the flanges 9, 10 have attachment holes 12, in such a manner that the holder 20 can be fixed in place by means of bolts (not shown) which are fitted into the attachment holes. The removable towing hook 14 is accommodated in the holder 20. The holder 20 and the towing hook 14 together form the towing hook structure 21 according to the invention. The towing hook ball 15 of the towing hook 14 is situated at a distance behind the support bar la. The attachment rod 16 of the towing hook 14 is fitted into the holder 20. The holder 20 is situated between the two flanges 9, 10 and has attachment holes 22 which are positioned so as to correspond to the attachment holes 12 in the flanges 9, 10. The holder 20 is attached to the flanges 9, 10 by means of the already mentioned bolts (not shown) which are fitted into the attachment holes 12, 22. The attachment holes 12 and 22 and the bolts together form suspension means 12, 22 for suspending the holder 20 from the support bar la of the support 1.

At their top end, the flanges 9, 10 are provided with a rounded contour in which the reinforcement shell 11 is accommodated and welded in place. The reinforcement shell 11 is in turn welded fixedly onto the support bar la.

The holder 20 has, in a known way, a through receiving hole 24 in which, as depicted in Figure 1, the straight attachment rod 16 of the towing hook 14 can be accommodated. This continous receiving hole has support means and/or stop means at one end, namely stop faces 26, and locking faces 27 near the other end, in a known way. The attachment rod has also support and/or stop means, namely projections, such as support pins 28, which project out of both sides of the attachment rod 16 of the towing hook. The attachment rod 16 is also provided with locking parts 29, namely pins, which rest against the stop faces 26. These support pins 28, the locking parts 29, as well as the stop faces 26 and the locking faces 27, are known per se, and are therefore not described in more detail here. The stop faces 26, locking faces 27, support pins 28 and locking parts 29 form stop and locking means interacting with one another for attaching the attachment rod 16 solidly, but removably to the holder 20. The support pins 28, locking parts 29, stop faces 26 and locking faces 27 are preferably in linear contact with one another in pairs.

When the attachment rod 16 is inserted into the receiving hole 24, the attachment rod 16 and receiving hole 24 define a common, straight longitudinal axis 31. As shown in Figures 2, 3 and 4, the attachment holes 22 are arranged symmetrically with respect to a line and/or plane of symmetry 30 which forms an angle of 45° with the axis 31. The two attachment holes 22 have axes which are parallel to one another and together define a plane 40. This plane 40 forms an angle of 45° with the longitudinal axis 31 of the attachment rod 16 and receiving hole 24.

The attachment holes 12 in the flanges 9, 10 are positioned in corresponding ways, with the result that the holder 20 can be fitted to the support structure both in the position illustrated in Figure 2 and in the position illustrated in Figure 3. In the position shown in Figure 2, the towing hook 14 can be used with an attachment rod 16 which runs horizontally. In the position shown in Figure 3 (and 4), it is possible to use a towing hook with an attachment rod which runs vertically.

Figure 4 shows the holder in the position used in the embodiment illustrated in Figure 3.

The receiving hole 24 opens out on the insertion face 32 of the holder 20. There is also a transversely running rear face 33, which forms an angle of 45° with the insertion face 32 and also adjoins a closure face 34 which runs at right angles with respect to the said insertion face 32. Furthermore, the holder has two side faces 35, 36, which face away from one another. These side faces have recesses 38 with a cutout 39, in which a closure cap (not shown) for the continuous receiving hole 24 can be arranged. The lugs of this closure cap, which are received in the recesses 38, are clamped securely between the side faces 35, 36 and the flanges 9, 10, resulting in a secure attachment. The closure cap ensures that any dirt which is splashed up cannot penetrate into the continuous receiving hole 24 on the rear side.

As an alternative, it would also be possible to use an elevated section, in which case the relevant lugs would have a correspondingly positioned recess.

## Claims

1. Towing hook structure (21), comprising a holder: (20) and a removable towing hook (14), which is provided with a towing hook ball (15) and an attachment rod (16), in which holder (20) the attachment rod (16) of the towing hook (14) is accommodated, which attachment rod (16) and holder (20) have interacting stop and locking means (26, 27, 28, 29) for attaching the attachment rod (16) to the holder (20), and which holder (20) has suspension means (22) for suspending it from a support (1), **characterized in that** the suspension means (22) are arranged in such a way that they allow the holder (20) to be attached to the support (1) in two positions, in one of which positions the attachment rod (16) is rotated through approximately 90° with respect to the other position, and that the suspension means (22) are positioned symmetrically with respect to a line of symmetry (30) which runs at approximately 45° with respect to a longitudinal axis (31) of the attachment rod (16).

2. Towing hook structure according to Claim 1, **characterized in that** the suspension means (22) have at least two attachment holes (22) which are provided in the holder (20) and directed transversely with respect to the attachment rod (16) and the axes of which define a plane (40) which forms an angle of 45° with a longitudinal axis (31) of the attachment rod (16), wherein said attachment holes (22) are preferable symmetric with respect to the line of symmetry (30).

3. Towing hook structure according to Claim 2, **characterized in that** the attachment rod (16) is accommodated in a through receiving hole (24) of the holder (20), that the receiving hole (24) has support means belonging to said stop and locking means (26, 27, 28, 29) at one end and, at the other end, can be closed by means of a cap, and that the attachment rod (16) is provided with projections belonging to said stop and locking means (26, 27, 28, 29) for acting upon the support means, wherein the support means comprises stop faces (26), wherein the projections of the rod (16) comprise, pins (28), and wherein the holder (20) has locking faces (27) which belong to said stop and locking means (26, 27, 28, 29) and face away from the stop faces (26).

4. Towing hook structure according to Claim 3, **characterized in that** the attachment holes (22) open out on two side faces (35, 36), which face away from one another, and the receiving hole (24) opens out on further faces (32, 33) which extend transversely between the said side faces (35, 36).

5. Towing hook structure according to Clam 4, **characterized in that** the receiving hole (24) opens out at an insertion face (32) which runs essentially transversely with respect to the receiving hole (24) and is adjoined, essentially at right angles, by a closure face (34).

6. Towing hook structure according to Claim 5, **characterized in that** the holder (20) has at least one rear face (33) which forms approximately an angle of 45° with the insertion face (32) and adjoins the closure face (34) approximately at an angle of 45°.

7. Towing hook structure according to any of Claim 4 to 6, **characterized in that** the cap has two lugs which engage over the side faces (35, 36), which face away from one another.

8. Suspension structure for a removable towing hook (14), comprising a towing hook structure (21) according to any of Claims 1 to 7, and a support (1), wherein the support (1) is suitable to be attached to the rear side of a vehicle, which support (1) has two flanges (9, 10), between which the holder (20) of the towing hook structure (21) is accommodated and the distance between which is approximately equal to the distance between side faces (35, 36), which face away from one another, of the holder (20), **characterized in that** the suspension means (22) are arranged in such a way that they allow the holder (20) to be attached to the flanges (9, 10) in two positions, in one of which positions the attachment rod (16) is rotated through approximately 90° with respect to the other position, and that the suspension means (22) are positioned symmetrically with respect to a line of symmetry (30) which runs at approximately 45° with respect to a longitudinal axis (31) of the attachment rod (16).

9. Suspension structure according to Claim 8, in which the flanges (9, 10) each have at least two holes (12), which are positioned so as to be aligned with two attachment holes (22) in the holder (20) or, as far as claim 8 is referred to any of claims 2 to 7, with said two attachment holes (22), and an attachment bolt is fitted through each of the aligned holes (12, 22) of the flanges (9, 10) and the holder (20).

10. Suspension structure according to Claim 8 or 9, **characterized in that** the support (1) is configured to be attached in such a way to a vehicle that a longitudinal axis (31) of the attachment rod (16) lies in a plane to which the vehicle is substantially symmetrical.

11. Holder for a towing hook structure according to any of Claims 1 to 7, the holder comprising suspension means (22) for suspending the holder to a support (1), and the holder further comprising a receiving hole (24) in which receiving hole (24) the attachment rod (16) of a removable towing hook (14) can be accommodated, **characterized in that** the suspension means (22) are arranged in such a way that they allow the holder (20) to be attached to the support (1) in two positions, in one of which positions the attachment rod (16) is suitable to be rotated through approximately 90° with respect to the other position, that the suspension means. (22) are positioned symmetrically with respect to a line of symmetry (30) and that the receiving hole (24) is formed in such a manner that the line of symmetry (30) runs at approximately 45° with respect to a longitudinal axis (31) of the attachment rod (16) when the latter is accommodated in the receiving hole (24).

## Patentansprüche

1. Zughakenanordnung (21) mit einem Halter (20) und einem abnehmbaren Zughaken (14), der mit einer Zughakenkugel (15) und einer Befestigungsstange (16) versehen ist, wobei die Befestigungsstange (16) des Zughakens (14) im Halter (20) sitzt, wobei die Befestigungsstange (16) und der Halter aufeinander einwirkende Anschlag- und Blockiermittel(26, 27, 28, 29) zum Befestigen der Befestigungsstange (16) am Halter (20) aufweisen, und wobei der Halter (20) Aufhängemittel (22) hat, um ihn an einem Support (1) aufzuhängen,
**dadurch gekennzeichnet, dass**
die Aufhängemittel (22) derart angeordnet sind, dass sie erlauben, den Halter (20) in zwei Stellungen am Support (1) zu befestigen und die Befestigungsstange (16) in einer dieser Stellungen um ungefähr 90° bezüglich der anderen Stellung verschwenkt ist, und dass die Aufhängemittel (22) symmetrisch bezüglich einer Symmetrielinie (30) positioniert sind, die ungefähr 45° zu einer Längsachse (31) der Befestigungsstange (16) verläuft.

2. Zughakenanordnung nach Anspruch 1,
**dadurch gekennzeichnet, dass**
die Aufhängemittel (22) mindestens zwei Befestigungslöcher (22) aufweisen, die im Halter (20) angeordnet und quer zur Befestigungsstange (16) sind und deren Achsen eine Ebene (40) definieren, die einen Winkel von 45° mit der Längsachse (31) der Befestigungsstange (16) bildet, wobei die genannten Befestigungslöcher (22) vorzugsweise symmetrisch bezüglich der Symmetrielinie (30) sind.

3. Zughakenanordnung nach Anspruch 2,
**dadurch gekennzeichnet, dass**
die Befestigungsstange (16) in einem durchgehenden Aufnahmeloch (24) des Halters (20) angeordnet ist, dass das Aufnahmeloch (24) an einem Ende zu den genannten Anschlag- und Blockiermitteln (26, 27, 28, 29) gehörende Stützmittel aufweist und am anderen Ende mittels eines Deckels geschlossen werden kann und dass die Befestigungsstange (16) mit zu den genannten Anschlag- und Blockiermitteln (26, 27, 28, 29) gehörenden Vorsprüngen zum Angreifen an den genannten Stützmitteln versehen ist, wobei die Stützmittel Anschlagflächen (26) aufweisen, wobei die Vorsprünge der Stange (16) Bolzen (28) aufweisen und wobei der Halter (20) Blockierflächen (27) aufweist, die zu den genannten Anschlag- und Blockiermitteln (27, 27, 28, 29) gehören und den Anschlagflächen (26) abgewandt sind.

4. Zughakenanordnung nach Anspruch 3,
**dadurch gekennzeichnet, dass**
die Befestigungslöcher (22) in zwei Seitenflächen (35, 36) münden, die einander abgewandt sind, und das Aufnahmeloch (24) in weitere Flächen (32, 33) mündet, die sich quer zwischen den genannten Seitenflächen (36, 36) erstrecken.

5. Zughakenanordnung nach Anspruch 4,
**dadurch gekennzeichnet, dass**
das Aufnahmeloch (24) in eine Einführfläche (32) mündet, die im Wesentlichen quer zum Aufnahmeloch (24) verläuft und im Wesentlichen rechtwinklig an eine Schliessfläche (34) anstösst.

6. Zughakenanordnung nach Anspruch 5,
**dadurch gekennzeichnet, dass**
der Halter (20) mindestens eine Rückfläche (33) aufweist, die ungefähr einen Winkel von 45° mit der Einführfläche (32) bildet und ungefähr unter einem Winkel von 45° an die Schliessfläche (34) angrenzt.

7. Zughakenanordnung nach einem der Ansprüche 4 bis 6,
**dadurch gekennzeichnet, dass**
der Deckel zwei Laschen hat, die über die einander abgewandten Seitenflächen (35, 35) greifen.

8. Aufhängungsstruktur für einen abnehmbaren Zughaken (14), mit einer Zughakenanordnung (21) nach einem der Ansprüche 1 bis 7 und einem Support (1), wobei der Support (1) für die Befestigung an der Hinterseite eines Fahrzeugs geeignet ist, wobei der Support (1) zwei Flansche (9, 10) aufweist, zwischen denen der Halter (20) der Zughakenanordnung (21) angeordnet ist, und der Abstand zwischen denen ungefähr gleich dem Abstand zwischen einander abgewandten Seitenflächen (35, 36) des Halters (20) ist,
**dadurch gekennzeichnet, dass**
die Aufhängemittel (22) derart angeordnet sind, dass sie erlauben, den Halter (20) in zwei Stellungen an den Flanschen (9, 10) zu befestigen, wobei die Befestigungsstange (16) in einer dieser Stellungen um ungefähr 90° bezüglich der anderen Stellung verschwenkt ist, und dass die Aufhängemittel (22) symmetrisch bezüglich einer Symmetrielinie (30) positioniert sind, die ungefähr 45° zu einer Längsachse (31) der Befestigungsstange (16) verläuft.

9. Aufhängungsstruktur nach Anspruch 8, bei er die Flansche (9, 10) je mindestens zwei Löcher (12) aufweisen, die angeordnet sind, um mit zwei Befestigungslöchern (22) im Halter (20) oder, soweit der Anspruch 8 auf einen der Ansprüche 2 bis 7 bezogen ist, mit den genannten zwei Befestigungslöchern (22) zu fluchten, und ein Befestigungsbolzen durch jedes der miteinander fluchtenden Löcher (12, 12) der Flansche (9, 10) und des Halters (20) gesteckt ist.

10. Aufhängungsstruktur nach Anspruch 8 oder 9,
**dadurch gekennzeichnet, dass**
der Support (1) ausgebildet ist, um derart am Fahrzeug befestigt zu werden, dass eine Längsachse (31) der Befestigungsstange (16) in einer Ebene liegt, zu der das Fahrzeug im Wesentlichen symmetrisch ist.

11. Halter für eine Zughakenanordnung nach einem der Ansprüche 1 bis 7, wobei der Halter Aufhängemittel (22) zum Aufhängen des Halters an einem Support (1) aufweist und wobei der Halter des Weiteren ein Aufnahmeloch (24) aufweist, in welches Aufnahmeloch (24) die Befestigungsstange (16) eines abnehmbaren Zughakens (14) eingesetzt werden kann,
**dadurch gekennzeichnet, dass**
die Aufhängemittel (22) derart angeordnet sind, dass sie erlauben, den Halter (20) in zwei Stellungen am Support (1) zu befestigen und die Befestigungsstange (16) geeignet ist, um in einer dieser Stellungen um ungefähr 90° bezüglich der anderen Stellung verschwenkt zu werden, dass die Aufhängemittel (22) symmetrisch zu einer Symmetrielinie (30) positioniert sind und dass das Aufnahmeloch (24) derart ausgebildet ist, dass die Symmetrielinie (30) ungefähr 45° bezüglich einer Längsachse (31) der Befestigungsstange (16) verläuft, wenn die letztere im Aufnahmeloch (24) angeordnet ist.

## Revendications

1. Une structure de crochet de remorquage (21), comprenant un teneur (20) et un crochet de remorquage amovible (14), qui est muni d'une balle de crochet de remorquage (15) et d'une tige de fixation (16), où la tige de fixation (16) du crochet de remorquage (14) est logée dans ledit teneur (20), où la tige de fixation (16) et le teneur (20) comprennent des moyens d'arrêt et de blocage (26, 27, 28, 29) interactifs pour attacher la tige de fixation (16) au teneur (20) et où ledit teneur (20) comprend des moyens de suspension (22) pour le suspendre à un support (1), **caractérisée en ce que** les moyens de suspension (22) sont disposés de manière à permettre au teneur (20) d'être attaché au support (1) en deux positions, où dans l'une de ces positions la tige de fixation (16) est tournée par environ 90° par rapport à l'autre position et **en ce que** les moyens de suspension (22) sont positionnés de manière symétrique par rapport à une ligne de symétrie (30) qui se situe à environ 45° par rapport à l'axe longitudinal (31) de la tige de fixation (16).

2. Une structure de crochet de remorquage selon la revendication 1, **caractérisée en ce que** les moyens de suspension (22) comprennent au moins deux trous de fixation (22), qui sont prévus dans le teneur (20) et orientés transversalement par rapport à la tige de fixation (16), et dont les axes définissent un plan (40) qui forme un angle de 45° avec l'axe longitudinal (31) de la tige de fixation (16), où lesdites trous de fixation (22) sont de préférence symétriques par rapport à la ligne de symétrie (30).

3. Une structure de crochet de remorquage selon la revendication 2, **caractérisée en ce que** la tige de fixation (16) est logée dans un trou de passage récepteur (24) du teneur (20), **en ce que** le trou récepteur (24) comprend à une extrémité des moyens de support appartenant aux dits moyens d'arrêt et de blocage (26, 27, 28, 29) et que l'autre extrémité peut être fermée au moyen d'un couvercle, et **en ce que** la tige de fixation (16) est munie de projections, faisant partie des dits moyens d'arrêt et de blocage (26, 27, 28, 29), pour agir sur le moyen de support, où le moyen de support comprend des faces d'arrêt (26), où les projections de la barre (16) comprennent des goujons (28), et où le teneur (20) comprend des faces de blocage (27) qui font partie des moyens d'arrêt et de blocage (26, 27, 28, 29) et qui se détourne des faces d'arrêt (26).

4. Une structure de crochet de remorquage selon la revendication 3, **caractérisée en ce que** les trous de fixation (22) s'ouvrent sur les deux faces latérales (35, 36) qui se détournent l'une de l'autre, et le trou récepteur (24) s'ouvre sur d'autres faces (32, 33) qui s'étendent transversalement entre les dites faces latérales (35, 36)

5. Une structure de crochet de remorquage selon la revendication 4, **caractérisée en ce que** le trou récepteur (24) s'ouvre sur une face d'insertion (32) qui s'étend essentiellement transversalement par rapport au trou récepteur (24) et qui est attenante à une face de clôture (34), essentiellement en angles droits.

6. Une structure de crochet de remorquage selon la revendication 5, **caractérisée en ce que** le teneur (20) comprend au moins une face arrière (33) qui forme environ un angle de 45° avec la face d'insertion (32) et est attenante à la face de clôture (34) environ en un angle de 45°.

7. Une structure de crochet de remorquage selon l'une quelconque des revendications 4 à 6, **caractérisée en ce que** le couvercle comprend deux pattes qui s'enclenchent par-dessus les faces latérales (35, 36) qui se détournent l'une de l'autre.

8. Une structure de suspension pour un crochet de remorquage amovible (14), comprenant une structure de crochet de remorquage (21) selon l'une quelconque des revendications 1 à 7, et un support (1), où le support (1) est approprié à être attaché à la partie arrière d'un véhicule, où le support (1) comprend deux brides (9, 10), entre lesquelles est logé le teneur (20) de la structure de crochet de remorquage (21), et où la distance entre elles est environ égale à la distance entre les faces latérales (35, 36) du teneur (20), qui se détournent l'une de l'autre, **caractérisée en ce que** les moyens de suspension (22) sont disposés de telle manière qu'ils permettent au teneur (20) d'être attaché aux brides (9, 10) en deux positions, où dans l'une de ces positions la tige de fixation (16) est tournée par environ 90° par rapport à l'autre position et **en ce que** les moyens de suspension (22) sont positionnés de manière symétrique par rapport à une ligne de symétrie (30) qui se situe à environ 45° par rapport à un axe longitudinal (31) de la tige de fixation (16).

9. Une structure de suspension selon la revendication 8, dans laquelle les brides (9, 10) comprennent chacune au moins deux trous (12), qui sont positionnés de manière à être alignés avec deux trous de fixation (22) dans le teneur (20) ou, pour autant que la revendication 8 se réfère à l'une quelconque des revendications 2 à 7, avec lesdites deux trous de fixation (22), et un boulon de fixation est inséré à travers chacun des trous (12, 22) alignés des brides (9, 10) et du teneur (20).

10. Une structure de suspension selon la revendication 8 ou 9, **caractérisée en ce que** le support (1) est conçu pour être attaché d'une telle manière à un véhicule qu'un axe longitudinal (31) de la tige de fixation (16) se situe sur un plan auquel le véhicule est essentiellement symétrique.

11. Un teneur pour une structure de crochet de remorquage selon l'une quelconque des revendications 1 à 7, où le teneur comprend des moyens de suspension (22) pour suspendre le teneur à un support (1), et où le teneur comprend en plus un trou récepteur (24), où la tige de fixation (16) d'un crochet de remorquage amovible (14) peut être logé dans le dit trou récepteur (24), **caractérisé en ce que** les moyens de suspension (22) sont disposés d'une telle manière qu'ils permettent au teneur (20) d'être attaché au support (1) en deux positions, où dans l'une de ces positions la tige de fixation (16) est appropriée à être tournée par environ 90° par rapport à l'autre position et **en ce que** les moyens de suspension (22) sont positionnés de manière symétrique par rapport à une ligne de symétrie (30) et que le trou récepteur (24) est formé de telle manière que la ligne de symétrie (30) se situe à environ 45° par rapport à un axe longitudinal (31) de la tige de fixation (16) quand cette dernière est logée dans le trou récepteur (24).
